# EUROPEAN PATENT APPLICATION

(11) **EP 3 531 139 A1**
(43) Date of publication of application: **28.08.2019**
(21) Application number: 17857816.7
(22) Date of filing: 25.09.2017
(51) Int. Cl.: G01R 19/165

(54) **ELECTRIC POWER CONSUMPTION OVERLOAD ALARM APPARATUS**

(30) Priority: 06.10.2016 HK 16111629
(71) Applicant: Chan, Wai Kuen, Hong Kong (CN)
(72) Inventor: Chan, Wai Kuen, Hong Kong (CN)
(74) Representative: Klunker IP Patentanwälte PartG mbB
(86) International application number: PCT/CN2017/103152
(87) International publication number: WO 2018/064935

(57) **Abstract**

Embodiments of the present disclosure relate to the field of electronic technologies, and more particularly relate to an electricity usage overload alarm apparatus, comprising: an apparatus body connected to a power supply end, at least one outlet being provided on the apparatus body, the outlet being configured for connecting an electrical appliance; a current detecting unit provided in the apparatus body, the current detecting unit being configured for detecting whether current in a circuit of the apparatus body or in an extension cord reaches a preset alarm threshold; and an alarm device configured for emitting an alarm signal prompt when the current detecting unit detects that the current reaches the preset alarm threshold. In this way, the present disclosure may prevent occurrence of safety accident due to overheat generated when the electrical appliance is overload.

## Description

### FIELD

Embodiments of the present disclosure generally relate to the field of electronics, and more particularly relate to an electricity usage overload alarm apparatus.

### BACKGROUND

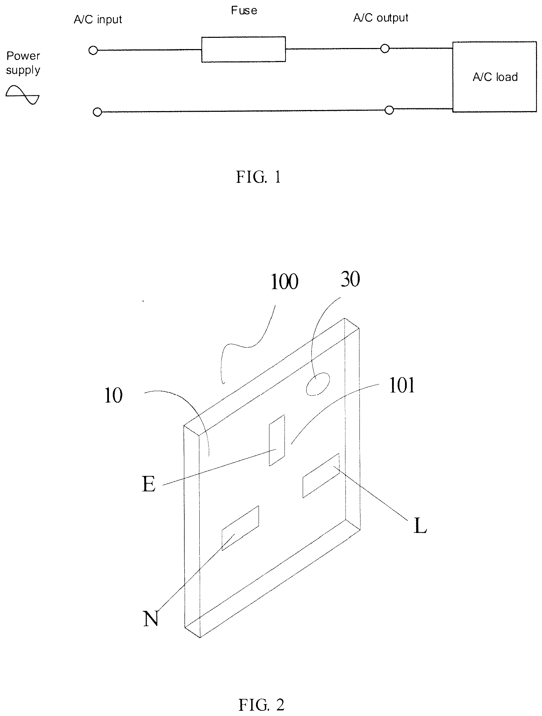

Sockets and extension cords are daily necessities for home, companies and plants. However, people often use the sockets and extension cords improperly, e.g., connecting multiple high-power consumption electrical appliances to a same socket or extension cord. Continuous working under power overload would burn a nearby object and cause a fire accident. Conventionally, most sockets are provided with a fuse to handle power overload or current surge. When the incoming current exceeds a predetermined fusion point, the fuse will be fused and the power will be interrupted, as shown in Fig. 1.

With the energetic publicity and education among citizens regarding how to correctly use the sockets and extension cords, as launched by various governments and relevant departments around the world, people have got some knowledge of how to safely use electrical appliances. However, for the sake of convenience, users still connect multiple electrical appliances to a same socket or power cord so as to meet their demands on using more electrical appliances.

As new electrical appliance products emerge rapidly, different models of electrical appliances have different power consumptions. Even common users have a desire for using the sockets or power cords safely to prevent accidents, no corresponding educations and products are available to them. Conventional sockets supplied in the market only provide professional manuals, such that not all users can correctly understand and use such manuals. For example, common users might not know whether power consumptions of the connected electrical appliances have exceeded a maximum threshold, whether the remaining current carrying capacity of the socket or extension cord supports safe use of one more electrical appliance, or whether electricity use has reached a risk level. Even some few sockets or power cords are currently provided with an indicator light to indicate whether the electricity use of the connected electrical appliances has exceeded an upper current carrying capacity threshold so as to address the above concerns, since most sockets are mounted at a lower position of a wall or beyond an eyesight (e.g., behind a desk or under a chair), when an alarm indicator light lights up, it is hardly noticed for prompt adjustment to prevent accidents.

Moreover, an electrical appliance connected to a socket or extension cord in a long term is usually ignored. Without regular maintenance, accidents easily occur. Further, as it is convenient to switch on/off an electrical appliance with a remote-control unit, the electrical appliance is always in a standby state. Besides power consumption, a standby-mode electrical appliance might become overheated to cause accidents. For an unattended home, company or plant, accidents or fire disasters easily occur. The prior art has provided a socket with an LED lamp to indicate a power use state, where an additional automatic power interruption functionality is enabled in the case of current overload. However, that technical solution only provides power interruption function in the case of overload, without emitting an alarm signal to the user upon or before power interruption; therefore, fire might be still caused without untimely notice.

In view of the above, conventional electricity usage overload alarm technologies apparently have inconveniences and defects in actual use, which need improvement.

### SUMMARY

An object of the present disclosure is to provide an electricity usage overload alarm apparatus to prevent safety accident due to potential overheat generated in the case of electricity usage overload of an electrical appliance, thereby overcoming at least part of the defects above.

To achieve the object above, the electricity usage overload alarm apparatus according to the present disclosure comprises:
an apparatus body connected to a power supply end, at least one outlet being provided on the apparatus body, the outlet being configured for connecting an electrical appliance;
a current detecting unit provided in the apparatus body, the current detecting unit being configured for detecting whether current in a circuit of the apparatus body or in an extension cord reaches a preset alarm threshold; and
an alarm device configured for emitting an alarm signal when the current detecting unit detects that the current reaches the preset alarm threshold.

In an embodiment of the present disclosure, the current detecting unit comprises:
a current sensor configured for measuring a numerical value of the current in the circuit of the apparatus body or in the extension cord, the current sensor being connected to a current short-circuit control unit; and
a current short circuit control unit configured for opening the circuit of the apparatus body when detecting that the numerical value of the current in the circuit of the apparatus body or in the extension cord reaches the alarm threshold.

In an embodiment of the present disclosure, the apparatus further comprises:
a first control unit connected to the current sensor and the current short-circuit control unit, respectively, the first control unit being configured for emitting a first control signal to the alarm device when the current sensing device detects that the numerical value of the current in the circuit of the apparatus body or in the extension cord reaches the alarm threshold and for controlling the alarm device to emit an alarm signal.

In an embodiment of the present disclosure, the alarm device comprises:
a single-color power indicator light which lights up when receiving the first control signal from the first control unit; and/or
a red-color power indicator light which lights up when receiving the first control signal from the first control unit; and/or
a buzzer which emits a buzzing sound upon receiving the first control signal from the first control unit.

In an embodiment of the present disclosure, the apparatus further comprises:
a communication network control unit connected to the first control unit and a home management system and/or a company smart management system, wherein the communication network control unit receives a second control signal emitted when the current sensor detects that the numerical value of the current in the circuit of the apparatus body or in the extension cord reaches the alarm threshold, and transmits, to the home management system and/or the company smart management system, information that the numerical value of the current in the circuit of the apparatus body or in the extension cord reaches the alarm threshold; and wherein
the home management system and/or company smart management receives the information and returns, to the first control unit via the communication network control unit, a control instruction of opening the circuit of the apparatus body or the extension cord based on user choice.

In an embodiment of the present disclosure, the communication network control unit comprises: a wireless network transmitter, a Bluetooth network transmitter or a programmable control unit.

In an embodiment of the present disclosure, the alarm threshold is 75%∼95% of a maximum current carrying capacity of the circuit of the apparatus body or the extension cord.

In an embodiment of the present disclosure, the alarm threshold is 90% of a maximum current carrying capacity of the circuit of the apparatus body or the extension cord.

In an embodiment of the present disclosure, the current sensor and the current short-circuit control unit are connected in series.

In an embodiment of the present disclosure, the first control unit is connected in series with the current sensor and the current short-circuit control unit, respectively.

In an embodiment of the present disclosure, the current sensor and the current short-circuit control unit are connected to the circuit of the apparatus body or a hot wire of the extension cord.

In an embodiment of the present disclosure, the home management system and/or the company smart management system comprises:
a mobile terminal which transmits a control instruction of opening the circuit of the apparatus body or the extension cord to the first control unit via the communication network control unit based on choice of the mobile terminal; and/or
a fixed terminal which transmits a control instruction of opening the circuit of the apparatus body or the extension cord to the first control unit via the communication network control unit based on choice of the mobile terminal.

In an embodiment of the present disclosure, the power supply end is an alternating current power supply end with a voltage of 220V or 110V and a frequency of 50∼60Hz.

By arranging the electricity usage overload alarm apparatus to comprise an apparatus body, a current detecting unit, and an alarm device, the present disclosure enables emitting of an alarm signal to a user via the alarm device when the current detecting unit detects that current in the circuit of the apparatus body or in the extension cord reaches a preset threshold. For example, an LED light or a buzzer in the alarm device may emit a light or a sound to alarm that the circuit of the apparatus body or the extension cord is in an overload state. Besides, by effectively connecting the socket or extension cord to the home management system and/or the company smart system, where a mobile phone is used to monitor power supply operation and remotely control on/off of the power supply, overheat of an electrical appliance due to electricity usage overload, which might cause fire accidents to a house, a company, or a plant, may be avoided.

### BRIEF DESCRIPTION OF THE DRAWINGS

Fig. 1 shows an electricity usage overload protection circuit diagram in prior art;
Fig. 2 is a stereoscopic diagram of an electricity usage overload apparatus according to an embodiment of the present disclosure;
Fig. 3 is a stereoscopic diagram of an electricity usage overload apparatus according to another embodiment of the present disclosure;
Fig. 4 is a circuit connection diagram of an electricity usage overload apparatus according to an embodiment of the present disclosure;
Fig. 5 is a circuit connection diagram of an electricity usage overload apparatus according to another embodiment of the present disclosure;
Fig. 6 is a circuit connection diagram of an electricity usage overload apparatus according to a further embodiment of the present disclosure.

### DETAILED DESCRIPTION OF EMBODIMENTS

To make the objects, technical solutions, and advantages of the present disclosure much clearer, the present disclosure will be further described in detail with reference to the accompanying drawings and the embodiments. It should be understood that the preferred embodiments described herein are only for explaining, rather than limiting, the present disclosure.

With reference to Figs. 2∼6, in a first embodiment of the present disclosure, an electricity usage overload alarm apparatus 100 is provided, comprising:
an apparatus body 10 connected to a power supply end, at least one outlet 101 being provided on the apparatus body 10, the outlet 101 being configured for connecting an electrical appliance;
a current detecting unit 20 provided in the apparatus body 10, the current detecting unit 20 being configured for detecting whether current in a circuit of the apparatus body 10 or in an extension cord reaches a preset alarm threshold; and
an alarm device 30 configured for emitting an alarm signal when the current detecting unit 20 detects that the current reaches the preset alarm threshold.

In this embodiment, the electricity usage overload alarm device 100 comprises an apparatus body 10, a current detecting unit 20, and an alarm device 30. Particularly, the apparatus body 10 is connected to a power supply end, which power supply end may be an alternating current (A/C) power supply end with a voltage of 220V or 110V and a frequency of 50∼60Hz. Moreover, at least one outlet 101 is provided on the apparatus body 10, wherein the outlet 101 may be configured for connecting an electrical appliance; Therefore, the outlet 101 may be a two-phase outlet or a three-phase outlet. Preferably, the apparatus body 10 has a cuboid appearance, and a housing of the apparatus body 10 is made of a fire-retardant material. For example, the housing of the apparatus body 10 may be made of a fire-proof and flame-retardant material with a high hardness, so as to prevent risks and offer safety and reliability. The current detecting unit 20 is configured for detecting whether current in a circuit of the apparatus body 10 or in an extension cord reaches a preset alarm threshold; for example, if the current in the present circuit reaches 10A while the alarm threshold is 12A, the alarm device does not emit an alarm signal. However, when the current detecting unit 20 detects that the current reaches the preset alarm threshold, i.e., 12A, an alarm signal will be emitted. The alarm threshold is substantively a current value when the circuit of the apparatus body 10 reaches a risk level. Specifically, the alarm threshold may be 75%∼95% of a maximum current carrying capacity of the circuit of the apparatus body or the extension cord; when reaching this range, it is generally believed that the circuit load reaches a risk level. Particularly, when the alarm threshold is set to 90% of a maximum current carrying capacity of the circuit of the apparatus body or the extension cord, it may be determined that a risk likely occurs if a timely measure is not adopted. Therefore, the alarm device 30 needs to timely emit an alarm signal. Further, it needs to be noted that in Figs. 2∼5, E represents ground wire; N represents neutral wire; and L represents hot wire.

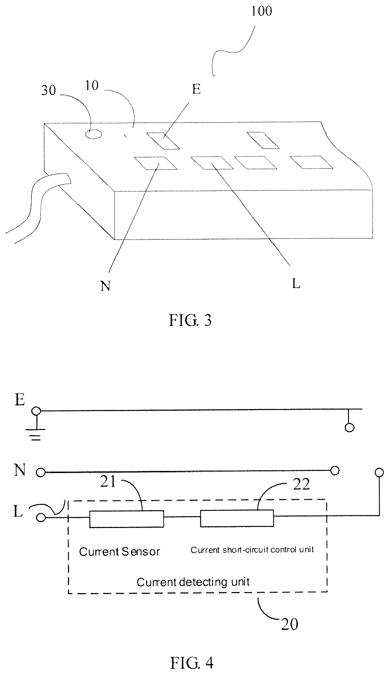

With reference to Figs. 4∼6, in a second embodiment of the present disclosure, the current detecting unit 20 comprises:
a current sensor 21 configured for measuring a numerical value of the current in the circuit of the apparatus body 10 or in the extension cord, the current sensor 21 being connected to a current short-circuit control unit 22; and
a current short-circuit control unit 22 configured for opening the circuit of the apparatus body 10 when detecting that the numerical value of the current in the circuit of the apparatus body 10 or in the extension cord reaches the alarm threshold.

In this embodiment, the current sensor 21 measures a numerical value of the current in the circuit of the apparatus body 10 or in the extension cord; the current short-circuit control unit 22 opens the circuit of the apparatus body 10 when detecting that the numerical value of the current in the circuit of the apparatus body 10 or in the extension cord reaches the alarm threshold. In this way, overload is avoided for the circuit of the apparatus body 10, which guarantees safety use of electrical appliances.

Preferably, the apparatus 100 further comprises:
a first control unit 40 connected to the current sensor 21 and the current short-circuit control unit 22, respectively, the first control unit 21 being configured for emitting a first control signal to the alarm device 30 when the current sensing device 21 detects that the numerical value of the current in the circuit of the apparatus body 10 or in the extension cord reaches the alarm threshold and for controlling the alarm device 30 to emit an alarm signal.

The alarm device 30 comprises:
a single-color power indicator light 31 which lights up when receiving the first control signal from the first control unit 40; and/or
a red-color power indicator light 32 which lights up when receiving the first control signal from the first control unit 40; and/or
a buzzer 33 which emits a buzzing sound upon receiving the first control signal from the first control unit 40.

In this embodiment, the first control unit 40 emits a first control signal to the alarm device 30 when the current sensing device 21 detects that the numerical value of the current in the circuit of the apparatus body 10 or in the extension cord reaches the alarm threshold. Upon receiving the first control signal, the alarm device 30 emits an alarm signal. Specifically, the single-color power indicator light 31 or the red-color power indicator light 32 lights up. The single-color power indicator light 31 may be any color power indicator light; as long as the single-color power indicator light 31 lights up, it indicates that the circuit of the apparatus body 10 has an overload risk. Besides, the buzzer 33 may further emit an alarm sound to attract user attention. Additionally, in an embodiment of the present disclosure, the current sensor 21 and the current short-circuit control unit 22 are connected in series. The first control unit 40 is connected in series with the current sensor 21 and the current short-circuit control unit 22, respectively. The current sensor 21 and the current short-circuit control unit 22 are connected to the circuit of the apparatus body 10 or a hot wire of the extension cord. When the electricity usage reaches a risk level, the electricity usage overload alarm apparatus 100 will start the buzzer to emit an alarm signal and meanwhile the red LED light will light up. This may prevent the electrical appliances from overheat to cause fire, which would otherwise cause accidents to a house, a company or a plant.

With reference to Figs. 4∼6, in a third embodiment of the present disclosure, the apparatus 100 further comprises:
a communication network control unit 50 connected to the first control unit 40 and a home management system and/or a company smart management system, wherein the communication network control unit 50 receives a second control signal emitted when the current sensor 21 detects that the numerical value of the current in the circuit of the apparatus body 10 or in the extension cord reaches the alarm threshold, and transmits, to the home management system and/or company smart management system, information that the numerical value of the current in the circuit of the apparatus body 10 or in the extension cord reaches the alarm threshold; wherein
the home management system and/or company smart management receives the information and returns, to the first control unit 40 via the communication network control unit, a control instruction of opening the circuit of the apparatus body 10 or the extension cord based on user choice.

In this embodiment, the first control unit 40 transmits, to the home management system and/or company smart management system via the communication network control unit 50, a control instruction when the current sensor 21 detects that the numerical value of the current in the circuit of the apparatus body 10 or in the extension cord reaches the alarm threshold, and the home management system and/or company smart management receives the information and returns, to the first control unit 40 via the communication network control unit, a control instruction of opening the circuit of the apparatus body 10 or the extension cord based on user choice. Particularly, the home management system and/or the company smart management system comprises:
a mobile terminal which transmits a control instruction of opening the circuit of the apparatus body 10 or the extension cord to the first control unit 40 via the communication network control unit based on choice of the mobile terminal; and/or
a fixed terminal which transmits a control instruction of opening the circuit of the apparatus body 10 or the extension cord to the first control unit 40 via the communication network control unit based on choice of the mobile terminal. The communication network control unit comprises: a wireless network transmitter, a Bluetooth network transmitter or a programmable control unit.

In this way, the first control unit 40 is connected to both the home management system and the company smart management system to receive the information and the alarm signal, and emits an instruction to remotely control on/off of the power supply. For example, via the communication network controller 50 (e.g., a Wi-Fi transmitter, a Bluetooth transmitter, or a power cable network communication interface), relevant information is transmitted as an alarm through a computer or a mobile App of the home management system and/or company smart management system; then, the user may perform a corresponding management action based on the information, i.e., emitting an instruction to remotely control the power supply, thereby implementing functionalities of monitoring power supply operation and switching on/off the power supply.

With reference to Figs. 2∼6, in an embodiment of the present disclosure, at least one outlet is provided on a surface of the apparatus body to provide connection to an electrical appliance, and an LED indicator light is provided to represent a preset current value of a working electrical appliance. Namely, one end of the apparatus body 10 is provided with an outlet connected to the electrical appliance, and the other end thereof is provided with a plug connected to the power supply end. Inside the apparatus body 10 is provided a current sensor 21 which is connected to the power supply end, a current interrupt controller 22 (protection unit), a first controller 50 which is connected to the current sensor 21 and the current interrupt controller 22. The first controller 50 outputs an indication based on a preset current value. For example, upon receiving the first control signal, a buzzer in the alarm device 30 buzzes, and/or the single-color power indicator light 31 or the red-color power indicator light 32 lights up. Besides, the communication network controller 50 comprises a Wi-Fi transmitter, a Bluetooth transmitter, or a power cable network communication interface. The communication network controller 50 transmits information to the home management system and/or the company smart management system, or the mobile terminal or the fixed terminal in the home management system and/or the company smart management system. For example, the fixed terminal is a computer, or the mobile terminal is an App in a mobile phone.

With reference to Figs. 2∼6, in an embodiment of the present disclosure, the power supply end meets the requirements in Hong Kong region, wherein the Hong Kong power supply is 220 V or 110V alternating current, and the frequency is 50∼60 Hz. After the electrical appliance is connected to the socket or the extension cord, the current sensor 21 will be connected to a power supply unit, and then outputs a signal and converts the signal into a current value to the controller. Power Watt = current I (Ampere) x Voltage (Volt). For example, electrical appliance power 660W = 3A (current) x 220 (mains voltage) The first controller 40 reacts based on the preset current value, e.g., switching on the LED light (the single-color power indicator light 31 or the red-color power indicator light 32) and meanwhile triggers the buzzer 33 to emit an alarm signal. In the case of overload, the power supply is interrupted. The RED light indicates that the current value has exceeded 90% of the maximum current carry capacity and enters a risk level; then the light will be switched on and an alarm signal will be emitted. If the current has exceeded the safety range, a protection unit, which is connected to the current sensing unit and the controller, will be activated to automatically interrupt the power supply. Further, sockets and extension cords are indispensable in daily life, such that it is very important as to how to use them safely. In the embodiments of the present disclosure, the apparatus alarms a potential overload state with an LED light and a buzzer which emits a sound. Most importantly, a sound may be emitted to alarm that the electricity usage is possibly overload, which may prevent high temperature due to overload, and to prompt that accident might occur when using the electrical appliance to thereby prevent occurrence of a risk. Sockets and extension cords are daily necessities for home, companies and factories. If a same electrical appliance (e.g., a fan in a house; a coffee maker or a water heater of a company; an immobile tool in a plant) is used in a long term, a socket or an extension cord will be used. However, such electrical appliances are always easily ignored; without maintenance and repair, an accident potentially occurs. Besides serving as an alarm device (the single-color power indicator light 31/ red-color power indicator light 32 and the buzzer 33) when the electricity usage reaches a risk level so as to prevent overload and guarantee safety, the socket or the extension cord may also be connected to the home management system and/or the company smart management system so as to use a mobile phone to monitor power supply operation and remotely control on/off of the power supply.

With reference to Figs. 2∼6, in an embodiment of the present disclosure, the electricity usage overload alarm apparatus 100 is provided an LED light; the first controller 40 reads current data of the current sensor 21 and emits an instruction based on a preset current value. In the case of instructing the single-color power indicator light 31 or the red-color indicator light 32 or the buzzer 33 to emit an alarm signal or even interrupt the power supply, a preset module in the electricity usage overload alarm apparatus 100 presets a current value range based on the maximum current carrying capacity of the socket or the extension cord and then issues a corresponding instruction.

In an embodiment of the present disclosure, supposing the safe current in the socket or extension cord is 15A and a water heater (6A) and an electric cooker (6A) are connected (12A in total), since the electricity usage is within 90% of the maximum current carrying capacity, the LED light will not light up, and the buzzer 33 will not be triggered, which indicates that the electricity usage is at the safe level.

In an embodiment of the present disclosure, supposing the safe current in the socket or extension cord is 12A and an iron (6A) and a hair dryer 5A (11A in total) are connected, since the electricity usage has exceeded 90% of the maximum current carrying capacity, the LED light will light up and the buzzer 33 will emit a sound, which indicates that the remaining current carrying capacity is insufficient to connect a further electrical appliance and the electricity usage is close to a risk level, and then a potential overload will be alarmed.

In an embodiment of the present disclosure, the electricity usage overload alarm device 100 is connected with an electric radiator (7A) and an electric cooker (6A); since the socket or the extension cord only has a 12A safe load, the current is overload. The protection unit, which is connected to the current sensing unit and the controller, will be activated to automatically interrupt the power supply. The LED light lights up and the buzzer 33 emits an alarm signal to prompt that the electricity usage has reached the risk level, and the protection unit interrupts the power supply due to the overload so as to make a simple prompt for safe electricity use, and the user will be clear about the cause of interruption.

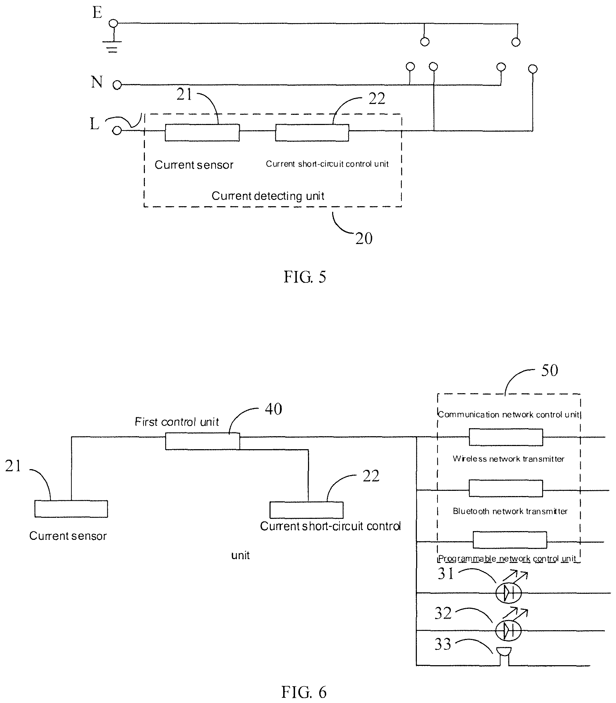

Referring to Fig. 6, in an embodiment of the present disclosure, the first controller 40 of the apparatus 100 may be connected to a home management system and/or a company smart management system so as to notify relevant information through a computer or a mobile App via a Wi-Fi transmitter, a Bluetooth transmitter, or a power cable network communication interface. Different information will be emitted based on preset current values. Afterwards, the user may perform a corresponding management action based on the information, i.e., emitting an instruction to remotely control the power supply, thereby implementing a role of monitoring power supply operation and switching on/off the power supply. For example, when the electrical appliance is in a standby state or a working state, if the current value is within 90% of the maximum current carrying capacity, the controller will not start the LED light and the buzzer 33, which only shows a working state when the user reads information presented by the home management system and/or the company smart management system. For another example, when the current value of working electrical appliances as connected has exceeded 90% of the maximum current carrying capacity and the information is preset as red-light alarm, the first controller 40 emits a piece of alarm information in real time. If the user does not check the home management system and/or company management system within a preset time limit, the controller will emit an alarm signal information again, till the user checks the home management system and/or the company smart management system. When the user accesses the home management system and/or company smart management system, he needs to perform a corresponding action to release the red-light alarm so as to prevent continued issuance of the alarm information. For example, when the current value of working electrical appliances exceeds the maximum current carrying capacity and the information is preset as stop information, the first controller 40 issues a piece of stop information in real time. If the user does not check the home management system and/or the company management system within a preset time limit, the controller will emit the stop information again, till the user checks the home management system and/or the company smart management system. When the user accesses the home management system and/or company smart management system, he needs to perform a corresponding action to release the stop alarm so as to prevent continued issuance of the stop information.

In various embodiments above, a plurality of units or devices of the electricity usage overload alarm apparatus may be hardware units or software-hardware combined units. The mobile terminal may be a mobile phone, a PDA (Personal Digital Assistant), a palmtop, etc.

In view of the above, by arranging the electricity usage overload alarm apparatus to comprise an apparatus body, a current detecting unit, and an alarm device, the present disclosure enables emitting of an alarm signal to a user via the alarm device when the current detecting unit detects that current in the circuit of the apparatus body or in the extension cord reaches a preset threshold. For example, an LED light or a buzzer in the alarm device may emit a light or a sound to alarm that the circuit of the apparatus body or the extension cord is in a current overload state. Besides, by effectively connecting the socket or extension cord to the home management system and/or the company smart system, where a mobile phone is used to monitor power supply operation and remotely control on/off of the power supply, overheat of an electrical appliance due to electricity usage overload, which might cause fire accidents to a house, a company, or a plant, may be avoided.

Of course, the present disclosure may also have various other embodiments. Without departing from the spirit and essence of the present disclosure, those skilled in the art may make various corresponding alterations and transformations based on the present disclosure, and all of such alterations and transformations should fall within the protection scope of the appended claims.

## Claims

1. An electricity usage overload alarm apparatus, comprising:
an apparatus body connected to a power supply end, at least one outlet being provided on the apparatus body, the outlet being configured for connecting an electrical appliance;
a current detecting unit provided in the apparatus body, the current detecting unit being configured for detecting whether current in a circuit of the apparatus body or in an extension cord reaches a preset alarm threshold; and
an alarm device configured for emitting an alarm signal when the current detecting unit detects that the current reaches the preset alarm threshold.

2. The apparatus according to claim 1, wherein the current detecting unit comprises:
a current sensor configured for measuring a numerical value of the current in the circuit of the apparatus body or in the extension cord, the current sensor being connected to a current short-circuit control unit; and
a current short-circuit control unit configured for opening the circuit of the apparatus body when detecting that the numerical value of the current in the circuit of the apparatus body or in the extension cord reaches the alarm threshold.

3. The apparatus according to claim 2, further comprising:
a first control unit connected to the current sensor and the current short-circuit control unit, respectively, the first control unit being configured for emitting a first control signal to the alarm device when the current sensing device detects that the numerical value of the current in the circuit of the apparatus body or in the extension cord reaches the alarm threshold and for controlling the alarm device to emit an alarm signal.

4. The apparatus according to claim 3, wherein the alarm device comprises:
a single-color power indicator light which lights up when receiving the first control signal from the first control unit; and/or
a red-color power indicator light which lights up when receiving the first control signal from the first control unit; and/or
a buzzer which emits a buzzing sound upon receiving the first control signal from the first control unit.

5. The apparatus according to claim 3, further comprising:
a communication network control unit connected to the first control unit and a home management system and/or a company smart management system, wherein the communication network control unit receives a second control signal emitted when the current sensor detects that the numerical value of the current in the circuit of the apparatus body or in the extension cord reaches the alarm threshold, and transmits, to the home management system and/or the company smart management system, information that the numerical value of the current in the circuit of the apparatus body or in the extension cord reaches the alarm threshold; and wherein
the home management system and/or company smart management receives the information and returns, to the first control unit via the communication network control unit, a control instruction of opening the circuit of the apparatus body or the extension cord based on user choice.

6. The apparatus according to claim 5, wherein the communication network control unit comprises: a wireless network transmitter, a Bluetooth network transmitter or a programmable control unit.

7. The apparatus according to claim 1, wherein the alarm threshold is 75%∼95% of a maximum current carrying capacity of the circuit of the apparatus body or the extension cord.

8. The apparatus according to claim 7, wherein the alarm threshold is 90% of the maximum load current value of the circuit of the apparatus body or the extension cord.

9. The apparatus according to claim 3, wherein the current sensor and the current short-circuit control unit are connected in series.

10. The apparatus according to claim 9, wherein the first control unit is connected in series with the current sensor and the current short-circuit control unit, respectively.

11. The apparatus according to claim 3, wherein the current sensor and the current short-circuit control unit are connected to the circuit of the apparatus body or a hot wire of the extension cord.

12. The apparatus according to claim 5, wherein the home management system and/or the company smart management system comprises:
a mobile terminal which transmits a control instruction of opening the circuit of the apparatus body or the extension cord to the first control unit via the communication network control unit based on choice of the mobile terminal; and/or
a fixed terminal which transmits a control instruction of opening the circuit of the apparatus body or the extension cord to the first control unit via the communication network control unit based on choice of the mobile terminal.

13. The apparatus according to claim 1, wherein the power supply end is an alternating current power supply end with a voltage of 220V or 110V and a frequency of 50∼60Hz.
